(19) Europäisches Patentamt
European Patent Office
Office européen des brevets

(11) **EP 4 361 661 A1**

(12) **DEMANDE DE BREVET EUROPEEN**

(43) Date de publication:
**01.05.2024  Bulletin 2024/18**

(21) Numéro de dépôt: **23204537.7**

(22) Date de dépôt: **19.10.2023**

(51) Classification Internationale des Brevets (IPC):
**G01S 5/02** *(2010.01)*        **G01S 17/48** *(2006.01)*

(52) Classification Coopérative des Brevets (CPC):
**G01S 5/0218;** H04J 3/0661

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **27.10.2022  FR 2211177**

(71) Demandeur: **THALES**
**92190 Meudon (FR)**

(72) Inventeur: HEURGUIER, Dominique
**92622 Gennevilliers Cedex (FR)**

(74) Mandataire: **Atout PI Laplace**
**Immeuble "Visium"**
**22, avenue Aristide Briand**
**94117 Arcueil Cedex (FR)**

(54) **PROCÉDÉ DE RADIODIFFUSION DE TEMPS PRÉCIS PAR UN RÉSEAU DE BALISES DE POSITIONS IMPRÉCISES**

(57)    L'invention concerne un procédé de transfert de temps vers un récepteur en lien radiofréquence avec au moins trois balises terrestres de transfert de temps synchronisées diffusant chacune un message horaire. Le procédé décrit comprend :
• une étape (201) de détermination d'une mesure de pseudo-distance Pdi associée à chaque balise de transfert de temps,
• une étape (202) de détermination d'une position initiale et d'un décalage temporel initial dudit récepteur à partir des mesures de pseudo-distances,

• une étape (203) de calcul d'un décalage temporel fin du récepteur, par un algorithme de résolution optimisant un critère de maximum de vraisemblance résolvant conjointement les positions des balises terrestres de transfert de temps, la position et le décalage temporel du récepteur.

L'invention concerne également un équipement de radiocommunications mettant en oeuvre le procédé, ainsi qu'un programme d'ordinateur et un support informatique contenant ledit programme.

FIG.2

**Description**

**Domaine technique :**

L'invention se situe dans le domaine du transfert d'une information de temps par voie radiofréquence. Elle porte en particulier sur un procédé permettant de transmettre une information de temps précise à une plateforme mobile ou semimobile par des balises de radiodiffusion dont les positions sont connues avec une faible précision.

**Technique antérieure :**

Le partage, entre plusieurs équipements, d'une référence de temps commune de bonne précision peut s'avérer indispensable. C'est le cas de manière générale dès lors qu'il est nécessaire de synchroniser des équipements, comme par exemple pour les transmissions radio multiplexées en temps (TDMA, sigle anglais pour *Time Division Multiple Access,* ou accès multiple à répartition dans le temps) ou étalées en code (CDMA, sigle anglais pour *Code Division Multiple Access,* ou accès multiple à répartition en code), ou utilisant l'étalement par saut de fréquence (FHSS, sigle anglais pour *Frequency Hopping Spread Spectrum*). La précision recherchée dépend de l'application visée, mais un ordre de grandeur standard de la précision recherché est la microseconde ou moins.

En règle générale, les équipements cherchant à déterminer un temps précis font appel au positionnement GNSS (sigle anglais pour *Global Navigation Satellite Systems,* ou système global de navigation par satellite), qui permet de déterminer précisément une position et une heure. Cependant, dans certains cas, la diffusion d'une heure par un réseau de satellites n'est pas possible, par exemple lorsque les conditions de visibilité des satellites sont mauvaises, que l'on ne dispose pas de moyens permettant de recevoir des signaux des satellites, ou lorsque l'on ne souhaite pas s'appuyer sur un réseau GNSS.

Il est alors possible de diffuser une information de temps précise par des voies filaires, mais cette solution n'est pas applicable dès lors que les équipements sont mobiles.

Une autre solution consiste à transmettre un marquant horaire par trois balises terrestres de transfert de temps ou plus sur une voie radio. Dès lors que les balises sont précisément synchronisées (par des voies filaires ou des horloges de haute précision) et que leurs positions sont transmises ou connues de l'équipement cherchant à déterminer l'heure du réseau, il est possible de calculer une distance avec chaque balise et d'en déduire la position de l'équipement. Cette détermination se fait de manière comparable à un positionnement GNSS, par l'estimation de pseudo-distances avec chacune des balises, obtenues par mesure du temps de propagation, puis par trilatération à partir des pseudo-distances.

Cette solution fonctionne dans le cas d'un réseau fixe de balises terrestres de transfert de temps dont la position est parfaitement connue. Ce n'est plus le cas lorsqu'il existe une imprécision élevée sur la position des balises de transfert de temps. Ce cas d'application est cependant fréquent lorsqu'il s'agit de déployer un réseau de manière provisoire sur un site en l'absence de service GNSS, ou dans le cas de réseaux dits « ad-hoc » (réseau sans fil décentralisé ne s'appuyant pas sur une architecture fixe de points d'accès). Dans ces réseaux, chaque noeud peut jouer le rôle de balise de transfert de temps, et contribue ainsi à la synchronisation des autres noeuds du réseau. Les noeuds pouvant être mobiles, leur position n'est pas nécessairement connue de manière très précise. La précision de l'heure diffusée peut alors ne pas atteindre les niveaux d'exigence souhaités, en particulier si les noeuds sont distants, même lorsque les balises de transfert de temps disposent d'horloges très précises.

Jusqu'à maintenant, les mesures mises en oeuvre pour pallier ce problème consistent à ajouter un poste d'erreur sur la position des balises de transfert de temps dans le calcul de la variance de l'estimateur de temps, à la manière d'un calcul de DOP (sigle anglais pour *Dilution Of* Précision) pour des liaisons GNSS, ce qui permet de prendre en compte une incertitude sur l'heure, mais ne permet pas d'améliorer la précision de l'heure diffusée.

Un objet de l'invention est donc de décrire un procédé de transfert d'une information précise de temps dans un réseau de radiocommunications depuis des balises terrestres en prenant en compte le problème de la précision de leur positionnement

**Résumé de l'invention :**

A cet effet, la présente invention décrit un procédé de transfert de temps vers un récepteur en lien radiofréquence avec au moins trois balises terrestres de transfert de temps synchronisées diffusant chacune un message horaire comprenant un marquant horaire et une heure d'émission. Le procédé décrit comprend :

- une première étape de calcul d'un instant d'arrivée des messages horaires transmis par lesdites balises terrestres de transfert de temps, les positions desdites balises terrestres de transfert de temps étant connues par le récepteur ou transmises au récepteur, et de détermination d'une mesure de pseudo-distance $Pd_i$ associée à chaque balise de transfert de temps,

- une deuxième étape de détermination d'une position initiale du récepteur et d'un décalage temporel initial entre le récepteur et les au moins trois balises de transfert de temps à partir des mesures de pseudo-distances calculées lors de la première étape,

- une troisième étape de calcul d'un décalage temporel fin dudit récepteur, par la mise en oeuvre d'un algorithme de résolution optimisant un critère de maximum de vraisemblance utilisant les valeurs calculées à la deuxième étape et résolvant conjointement les positions des balises terrestres de transfert de temps, la position du récepteur et le décalage temporel du récepteur.

Selon un mode de réalisation, la troisième étape comprend :

- la construction d'un vecteur d'état $X$ comprenant la position estimée du récepteur, le décalage temporel estimé du récepteur, et les positions estimées des balises terrestres de transfert de temps,

- la construction d'un vecteur d'observation y comprenant les positions connues ou transmises desdites au moins trois balises terrestres de transfert de temps et les pseudo-distances calculées lors de la première étape, la construction d'un vecteur d'observation linéarisé $Y$ comprenant un écart entre les positions connues ou transmises desdites au moins trois balises terrestres de transfert de temps et leurs positions estimées, et un écart entre les pseudo-distances calculées lors de la première étape (201) et des pseudo-distances construites à partir des valeurs du vecteur d'état $X$,

- la construction d'une matrice Jacobienne $H$ à partir du vecteur d'état $X$ et du vecteur d'observation y tel que $H = \frac{\partial y}{\partial X}$, et

- la résolution du système, en calculant $\hat{X} = H * Y$.

Avantageusement, le calcul de $\hat{X} = H * Y$ est itéré plusieurs fois, les valeurs du vecteur $Y$ et de la matrice $H$ étant recalculées à chaque itération en fonction du vecteur $\hat{X}$ déterminé à l'itération précédente.

Selon différents modes de réalisation, l'algorithme utilisant un critère de maximum de vraisemblance mis en oeuvre lors de la troisième étape est un algorithme de Gauss-Newton ou un algorithme de Levenberg-Marquardt.

Avantageusement, la deuxième étape est mise en oeuvre par un procédé d'estimation pseudo-linéaire de la position initiale et du décalage temporel initial dudit récepteur.

Selon un mode de réalisation, l'estimation pseudo-linéaire comprend :

- le calcul d'une position initiale $\hat{P}$ du récepteur, avec $\hat{P} = (G(R)^t \cdot G(R))^{-1} G(R)^t \cdot f(R)$, où $G$ est une matrice construite à partir des mesures de pseudo-distances $Pd_i$ calculées lors de la première étape du procédé et des positions connues ou transmises des balises terrestres de transfert de temps, $R$ est un vecteur d'observation comprenant les mesures de pseudo-distances $Pd_i$ faites lors de la première étape du procédé, et $f$ est une pseudo-mesure construite à partir des mesures de pseudo-distance $Pd_i$ faites lors de la première étape du procédé et des positions connues ou transmises des balises,

- le calcul d'un décalage temporel initial $\widehat{\Delta t}$ tel que $\widehat{\Delta t} = \frac{1}{N} \sum_{i=1}^{N} (Pd_i - \|\hat{Z}_i - \hat{P}\|)$, avec N le nombre de balises terrestres de transfert de temps et $\hat{Z}_i$ un vecteur comprenant les positions connues ou transmises des balises terrestres de transfert de temps.

Le procédé selon l'invention est particulièrement adapté à des cas d'usage où la position des balises terrestres de transfert de temps est connue de manière imparfaite.

L'invention porte également sur un équipement de radiocommunications (ou récepteur RF) en lien radiofréquence avec au moins trois balises terrestres de transfert de temps synchronisées diffusant chacune un message horaire comprenant un marquant horaire et une heure d'émission. L'équipement de radiocommunications selon l'invention comprend une chaîne radio configurée pour recevoir et interpréter le message horaire transmis par les balises. Il comprend en outre des moyens de calculs configurés pour mettre en oeuvre un procédé de transfert de temps selon l'une des revendications précédentes.

Enfin, l'invention porte également sur un programme d'ordinateur comprenant des instructions de code de programme pour l'exécution des étapes du procédé de transfert de temps selon l'invention lorsque ledit programme est exécuté sur un ordinateur, et un support d'enregistrement lisible par un ordinateur sur lequel est enregistré un tel programme d'ordinateur.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple, où :

- la figure 1 représente une configuration d'équipements dans laquelle un procédé de transfert de temps d'un équipement radio selon l'invention peut être mis en oeuvre ;

- la figure 2 représente schématiquement les étapes d'un procédé de transfert de temps selon un mode de réalisation de l'invention ;

- la figure 3 représente une configuration opérationnelle dans laquelle est mis en oeuvre un procédé de transfert de temps selon l'invention.

**Description détaillée :**

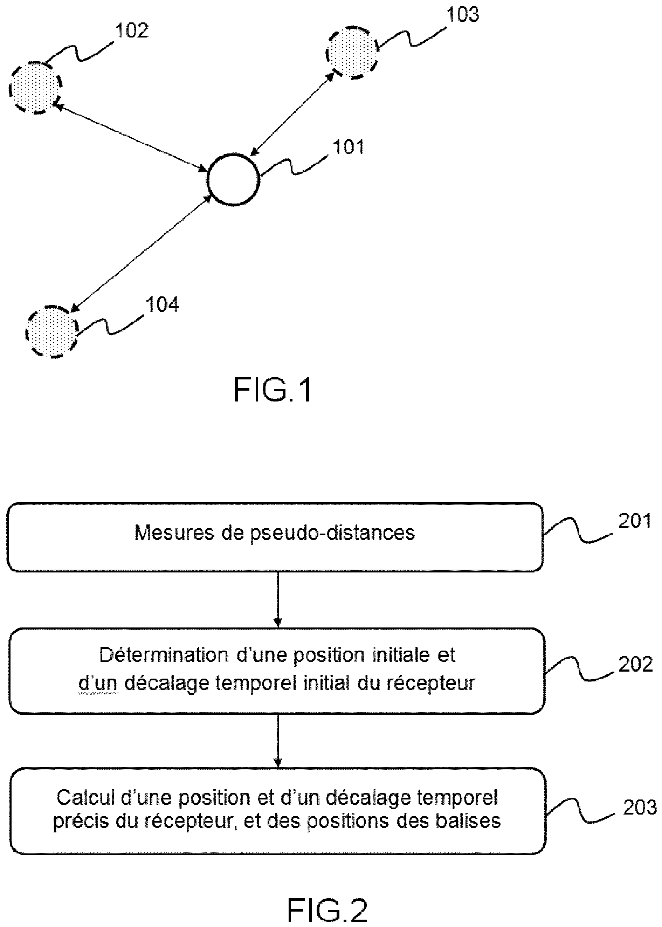

La figure 1 représente une configuration d'équipements dans laquelle un procédé de transfert de temps selon l'invention peut être mis en oeuvre. Il comprend un équipement 101 cherchant à se synchroniser temporellement avec au moins trois balises terrestres de transfert de temps 102 à 104 avec lesquelles il est en lien radio. L'équipement radio 101 peut être mobile ou fixe. Les balises terrestres de transfert de temps peuvent être mobiles ou temporairement fixes mais de positionnements approximatifs, de sorte que leurs positions ne sont connues que de manière imparfaite.

Les balises sont synchronisées très précisément, par exemple en embarquant des horloges de haute précision comme des horloges atomiques ou en étant raccordées à un réseau filaire ou un réseau radio dédié implémentant un mécanisme de synchronisation précis.

Par la suite, on considérera que le réseau est plan, et que les inconnues portent uniquement sur des positions orthogonales x et y dans un plan horizontal. Seules trois balises de transfert de temps sont donc nécessaires pour permettre à un équipement radio de récupérer une information de temps précise. Cependant, l'invention s'applique également en dehors d'un plan, en ajoutant la dimension z orthogonale à x et y, auquel cas un minimum de quatre stations est requis. L'ajout de stations de transfert de temps supplémentaires permet d'améliorer la qualité de la détermination de l'heure, en lissant le bruit de mesure.

Le procédé de transfert de temps selon l'invention consiste à prendre en compte explicitement les positions des balises de transfert de temps dans un estimateur mis en oeuvre par le récepteur, afin d'estimer conjointement les positions précises des balises, la position du récepteur et son biais temporel par rapport au réseau de balises.

Il suppose l'existence d'une forme d'onde radio adaptée au besoin de transfert de temps par radiodiffusion, c'est-à-dire la transmission par les balises d'un message horaire et d'un top horloge périodique, que le récepteur radio à synchroniser sait recevoir et mesurer précisément. Le message horaire contient l'instant d'émission du top horloge, défini selon le temps de référence du réseau de balises. La position de chaque balise (potentiellement imprécise) peut être transmise dans le message horaire, mémorisée dans le récepteur, ou transmise au récepteur par une liaison de données.

Le procédé selon l'invention nécessite la mesure des instants d'arrivée (en anglais TOA pour *Time of Arrival*) des marquants horaires par le récepteur. La précision de cette mesure dépend de la largeur de bande de la forme d'onde utilisée pour transmettre l'information de temps. Elle est fonction du produit BT, avec B la largeur de bande et T la durée d'un symbole, et du SNR (sigle anglais pour *Signal to Noise* Ratio, ou rapport signal à bruit). La valeur théorique maximale de sa variance, donnée par la borne de Cramer-Rao, est :

$$\sigma_{TOA} = \frac{1}{2\pi B \sqrt{\frac{2B}{N_0}}} = \frac{1}{2\pi B \sqrt{2\,BT\,SNR}},$$

avec $N_0$ la densité spectrale de bruit, et $\sigma_{TOA}$ la variance de la mesure de temps d'arrivée.

Les paramètres de la forme d'onde utilisée pour la transmission radio du message horaire et du top horloge doivent donc être dimensionnés de manière à offrir la précision recherchée. Par exemple, pour une largeur de bande B de 1 MHz avec une durée symbole T de 1 ms et un SNR de 10 dB, la variance de la mesure de temps $\sigma_{TOA}$ sera de 1,2 ns. En règle générale, on vise des variances $\sigma_{TOA}$ inférieures à 30 ns, voire inférieures à 10 ns. Avantageusement, la forme d'onde choisie peut être une forme d'onde par étalement de spectre, pour lesquelles la largeur de bande est généralement importante et permet d'obtenir des précisions de l'ordre de la nanoseconde pour des SNR très faibles. Par exemple, pour B égal à 20 MHz, T égal à 1 ms et un SNR de -30 dB, $\sigma_{TOA}$ est égal à 1,3 ns.

La figure 2 représente schématiquement les étapes d'un procédé de transfert de temps selon un mode de réalisation de l'invention. Il comprend les étapes suivantes :

- une étape 201 de mesures de pseudo-distances avec au moins trois balises terrestres de transfert de temps,
- une étape 202 de calcul d'une position initiale et d'un décalage temporel initial du récepteur, à partir des pseudo-distances. Cette étape peut avantageusement mettre en oeuvre une résolution initiale efficace reposant sur une forme clause, c'est-à-dire une forme donnant directement la solution recherchée en l'absence de bruit,
- une étape 203 d'estimation conjointe d'un biais d'horloge du récepteur, par la mise en oeuvre d'un algorithme de résolution optimisant un critère de maximum de vraisemblance résolvant conjointement la position des balises terrestres de transfert de temps, la position du récepteur et le décalage temporel du récepteur par rapport aux balises de transfert de temps.

L'étape 201 est une étape habituelle pour l'homme du métier, qui consiste à détecter les tops de synchronisation dans les signaux transmis par les balises pour déterminer un instant d'arrivée du signal, et à les confronter avec leurs instants d'émission, transmis dans le message horaire contenu dans le signal, afin de calculer une différence de temps, et par conséquent une pseudo-distance entre le récepteur et les balises de transfert de temps avec lesquelles il est en lien radio.

La pseudo-distance $Pd_i$ mesurée entre la balise de transfert de temps i et le récepteur vaut $Pd_i = c(TOA_i - Te_i + \Delta t + e_i) = d_i + c. \Delta t + c.e_i$, avec :

- $TOA_i$ l'heure d'arrivée du top de synchronisation dans le signal provenant de la balise i, mesuré par le récepteur à partir de son horloge locale,

- $Te_i$ l'heure d'émission par la balise du top de synchronisation, heure mesurée selon la référence temps du système de balises et transmise dans le message horaire,

- $\Delta t$ le biais de l'horloge du récepteur, soit la différence entre le temps du système de balises et le temps de l'horloge locale du récepteur,

- $e_i$ un bruit blanc gaussien affectant la mesure,

- c la vitesse de la lumière (vitesse de propagation du signal radio), et

- $d_i$ la distance entre la balise i et le récepteur,

- Pd le vecteur formé à partir de l'ensemble des valeurs des $Pd_i$.

L'étape 202 consiste, à partir de N pseudo-distances $Pd_i$ obtenu à la première étape 201, à calculer une position initiale du récepteur et une estimée initiale du biais d'horloge de cet équipement, N étant supérieur ou égal à 3. Par exemple, cette position et ce biais d'horloge peuvent être obtenus par trilatération, en appliquant des techniques bien connues de l'homme du métier.

A l'issue de l'étape 202, on dispose d'une position initiale $\hat{P}$ du récepteur et d'un décalage temporel $\widehat{\Delta t}$ correspondant à un biais entre l'horloge du récepteur et l'heure sur laquelle sont synchronisées les balises. Ces valeurs sont peu précises puisque les mesures sont entachées des erreurs de positionnement des balises de transfert de temps (potentiellement importantes) et des bruits blancs gaussiens $e_i$.

L'étape 203 consiste à estimer le biais d'horloge $\Delta t$ par un algorithme optimisant un critère de maximum de vraisemblance résolvant conjointement les positions $\hat{Z_i}$ des balises terrestres de transfert de temps, le biais d'horloge $\Delta t$ et la position P du récepteur.

Cette étape peut être mise en oeuvre par exemple par un algorithme de Gauss-Newton, bien connu de l'homme du métier, ou par un algorithme de résolution des moindres carrés équivalent, par exemple un algorithme de Levenberg-Marquardt.

La suite de la description sera donnée en utilisant un algorithme de Gauss-Newton, de manière illustrative seulement. Les notations suivantes seront adoptées :

- $Z_i$ désigne la position exacte de la balise de transfert de temps i, avec i e [1, N],

- $M_i$ désigne la position connue de la balise de transfert de temps i, avec $M_i = Z_i + \eta_i$ avec $\eta_i$ son erreur de positionnement, et $M$ est le vecteur formé à partir de l'ensemble des valeurs des $M_i$,

- $\hat{Z}_i$ désigne la position estimée de la balise de transfert de temps i, initialisée à $\hat{Z}_i = M_i$, et $\hat{Z}$ est le vecteur formé à partir de l'ensemble des valeurs des $\hat{Z}_i$,

- $\widehat{\Delta t}$ désigne l'estimation du biais d'horloge du récepteur.

Toutes les notations de position peuvent être décomposées selon un premier axe x et un deuxième axe y orthogonal à x dans un plan horizontal, par exemple $Z_{xi}$ et $Z_{yi}$.

Selon un mode de réalisation, l'étape 203 comprend la construction d'un vecteur d'état $X$ comprenant la position estimée $\hat{P}$ du récepteur, initialisée à l'étape 202, le biais d'horloge estimé $\widehat{\Delta t}$ et les positions estimées $\hat{Z}_i$ des balises de transfert de temps, avec par exemple :

$$X = \begin{bmatrix} \hat{P} \\ c.\widehat{\Delta t} \\ \hat{Z} \end{bmatrix} = \begin{bmatrix} \hat{P}_x \\ \hat{P}_y \\ c.\widehat{\Delta t} \\ \hat{Z}_{x1} \\ \hat{Z}_{y1} \\ \vdots \\ \hat{Z}_{xN} \\ \hat{Z}_{yN} \end{bmatrix}.$$

L'étape 203 comprend également la construction d'un vecteur d'observation $y = \begin{bmatrix} M \\ Pd \end{bmatrix}$ à partir des positions connues ou transmises des balises et des pseudodistances calculées lors de la première étape 201, et de son pendant linéarisé $Y$, qui comprend l'écart entre les positions connues des balises de transfert de temps et leurs positions estimées, et l'écart entre les pseudo-distances calculées lors de la première étape 201 et des pseudo-distances construites à partir des positions estimées du récepteur et des balises terrestres de transfert de temps, et du décalage temporel entre le récepteur et les balises :

$$Y = \begin{bmatrix} M - \hat{Z} \\ Pd - \hat{d} - c.\widehat{\Delta t} \end{bmatrix} = \begin{bmatrix} M_{x1} - \hat{Z}_{x1} \\ M_{y1} - \hat{Z}_{y1} \\ \vdots \\ M_{xN} - \hat{Z}_{xN} \\ M_{yN} - \hat{Z}_{yN} \\ Pd_1 - \widehat{d_1} - c.\widehat{\Delta t} \\ \vdots \\ Pd_N - \widehat{d_N} - c.\widehat{\Delta t} \end{bmatrix}.$$

avec $\hat{d}_i$ la distance entre la position estimée $\hat{P}$ du récepteur et la position estimée $\hat{Z}_i$ de la balise terrestre de transfert de temps d'indice i, et $\hat{d}$ le vecteur construit à partir des $\hat{d}_i$. Lors de la première itération, les positions estimées $\hat{Z}$ des

balises terrestres de transfert de temps sont égales à leurs positions connues ou transmises $M$, et le décalage temporel estimé $\widehat{\Delta t}$ est nul.

L'étape 203 comprend également la construction de la matrice Jacobienne $H$ à partir des vecteurs $X$ et $y$, avec :

$$H = \frac{\partial y}{\partial X} = \begin{bmatrix} \dfrac{\partial M}{\partial X} \\ \dfrac{\partial Pd}{\partial X} \end{bmatrix}.$$

Par construction, $\dfrac{\partial M_{xi}}{\partial Z_{xi}} = 1$ et $\dfrac{\partial M_{yi}}{\partial Z_{yi}} = 1$. Par conséquent :

$$\frac{\partial M_{xi}}{\partial X} = \begin{bmatrix} 0 & 0 & ... & 0 & 1 & 0 & \cdots \end{bmatrix},$$

$$\frac{\partial M_{yi}}{\partial X} = \begin{bmatrix} 0 & 0 & \cdots & 0 & 0 & 1 & \cdots \end{bmatrix}.$$

Par construction toujours :

$$\frac{\partial Pd_i}{\partial X} = \begin{bmatrix} -\dfrac{\hat{Z}_{yi} - \hat{P}_y}{\hat{d}_i} & -\dfrac{\hat{Z}_{xi} - \hat{P}_x}{\hat{d}_i} & 1 & 0 & 0 & \dfrac{\hat{Z}_{yi} - \hat{P}_y}{\hat{d}_i} & \dfrac{\hat{Z}_{xi} - \hat{P}_x}{\hat{d}_i} & 0 & 0 \end{bmatrix},$$

de sorte que :

$$H = \begin{bmatrix} 0 & 0 & 0 & 1 & 0 & 0 & 0 & 0 & 0 \\ \vdots & \vdots & \vdots & \vdots & \ddots & 0 & 0 & 0 & 0 \\ 0 & 0 & 0 & 0 & 0 & 1 & 0 & 0 & 0 \\ 0 & 0 & 0 & 0 & 0 & 0 & \ddots & 0 & 0 \\ 0 & 0 & 0 & 0 & 0 & 0 & 0 & 1 & 0 \\ 0 & 0 & 0 & 0 & 0 & 0 & 0 & 0 & 1 \\ -\dfrac{\hat{Z}_{y1} - \hat{P}_y}{\hat{d}_1} & -\dfrac{\hat{Z}_{x1} - \hat{P}_x}{\hat{d}_1} & 1 & \dfrac{\hat{Z}_{y1} - \hat{P}_y}{\hat{d}_1} & \dfrac{\hat{Z}_{x1} - \hat{P}_x}{\hat{d}_1} & 0 & 0 & 0 & 0 \\ \vdots & \vdots & \vdots & \vdots & \vdots & \ddots & \ddots & \vdots & \vdots \\ -\dfrac{\hat{Z}_{yN} - \hat{P}_y}{\hat{d}_N} & -\dfrac{\hat{Z}_{xN} - \hat{P}_x}{\hat{d}_N} & 1 & 0 & 0 & 0 & 0 & \dfrac{\hat{Z}_{yN} - \hat{P}_y}{\hat{d}_N} & \dfrac{\hat{Z}_{xN} - \hat{P}_x}{\hat{d}_N} \end{bmatrix}$$

La solution de ce système est calculée par un estimateur du maximum de vraisemblance mis en oeuvre par exemple avec un algorithme de Gauss-Newton initialisé avec les valeurs calculées lors de la deuxième étape 202 du procédé selon l'invention, par la formule :

$$\hat{X} = (H^t \Gamma_\varepsilon^{-1} H)^{-1}.H^t \Gamma_\varepsilon^{-1} Y = H^* Y$$

avec $\Gamma_\varepsilon$ la matrice de covariance d'observation, qui permet de caractériser la précision de l'estimateur.

L'estimée du vecteur d'état *X,* qui contient en particulier une estimation du biais d'horloge *Δt* du récepteur peut donc être obtenue très simplement à partir de la matrice *H* et du vecteur *Y.* Avantageusement, ce calcul est réalisé itérativement, en mettant à jour à chaque itération le vecteur d'observation *Y* et la matrice $H = \frac{\partial y}{\partial X}$ avec les valeurs du vecteur d'état $\hat{X}$ calculé à l'itération précédente, afin de linéariser et améliorer l'estimation de *X* à chaque itération. Les itérations peuvent être stoppées par exemple en évaluant un critère d'arrêt sur la norme $\|X_{l+1} - X_l\|$, avec $X_l$ le vecteur d'état *X* obtenu à l'itération *l,* et $X_{l+1}$ le vecteur d'état *X* obtenu à l'itération *l* + 1.

Avantageusement, des mesures successives du vecteur *X* peuvent adresser un filtre de lissage récursif afin notamment de prendre en compte la mobilité du récepteur et/ou des balises de transfert de temps.

Le calcul décrit ci-dessus réalise l'optimisation conjointe de la position du récepteur, de son biais d'horloge, et des positions des balises terrestres de transfert de temps. Cette optimisation conjointe permet d'améliorer la qualité de la mesure du biais d'horloge lorsque la position des balises de transfert de temps est imprécise.

La matrice de covariance d'observation $\Gamma_\varepsilon$ vaut :

$$\Gamma_\varepsilon = \begin{bmatrix} \Gamma_\mu & 0 \\ 0 & \Gamma_e \end{bmatrix},$$

où :

- $\Gamma_\mu$ est la matrice de covariance d'erreur sur la connaissance des positions des balises. Les mesures de position des balises sont généralement supposées indépendantes entre elles. Cette matrice est donc constituée d'une diagonale de matrices carrées $\Gamma_{\mu i}$ des variances de position de chaque balise i. Le bruit de mesure $\eta_i$ est supposé connu, gaussien et centré, de sorte que $\Gamma_{\mu i} = E(\eta_i \cdot \eta_i')$, avec E() l'espérance mathématique et $\eta_i$ le vecteur bruit gaussien sur la mesure de position Mi de la balise i ($M_i = Z_i + \eta_i$),
- $\Gamma_e$ est la matrice d'observation des pseudo-distances Pdi. Le bruit de mesure $\varepsilon_i$ est supposé connu, gaussien et centré, et $\Gamma_{ei} = E(\varepsilon_i^2)$, avec $\Gamma_{ei}$ la valeur de $\Gamma_e$ à la ligne i et la colonne i.

La matrice de covariance de l'estimateur $\Gamma_{\hat{X}}$ vaut alors :

$$\Gamma_{\hat{X}} = (H^t \Gamma_\varepsilon^{-1} H)^{-1}.$$

Les équations données ci-dessus sont formées à partir de matrices agencées selon une organisation donnée à titre d'illustration seulement. Les mêmes résultats peuvent être atteints en agençant les matrices de manière différente, par exemple en permutant leurs lignes, sans que cela n'affecte la précision des calculs et les résultats obtenus.

Selon un mode de réalisation avantageux, la deuxième étape 202 du procédé, qui vise à déterminer une position initiale et un décalage temporel initial du récepteur, est mise en oeuvre par une estimation pseudo-linéaire reposant sur une forme clause.

Cette solution consiste à parcourir les $Q = \frac{N(N-1)(N-2)}{6}$ triplets (i, j, k) de balises de transfert de temps, avec *i < j < k.* Pour chaque triplet d'indice q allant de 1 à Q, on calcule alors une pseudo-mesure $f_q$ telle que :

$$f_q = \frac{1}{2} r_{ij} . r_{ik} (r_{ik} - r_{ij}) - \frac{1}{2} \left( r_{ik} (M_i M_j)^2 - r_{ij} (M_i M_k)^2 \right) + r_{ik} \overrightarrow{M_i M_j} \, \overrightarrow{OM_j} - r_{ij} \overrightarrow{M_i M_k} \, \overrightarrow{OM_k}$$

avec O le centre du repère, et $r_{ij}$ la différence entre la pseudo-distance Pd$_i$ et la pseudo-distance Pd$_j$, soit :

$$r_{ij} = Pd_i - Pd_j.$$

On calcule également le vecteur $G_q$ à partir des mesures de pseudo-distances et de la position connue des balises, soit :

$$G_q = r_{ik}\overrightarrow{M_iM_j} - r_{ij}\overrightarrow{M_iM_k}$$

Enfin, on construit le vecteur d'observation R à partir des mesures de pseudo distances, soit :

$$R = \begin{bmatrix} Pd_1 \\ \vdots \\ Pd_N \end{bmatrix}.$$

Une estimation pseudo-linéaire de la position initiale du récepteur et de son biais d'horloge $\Delta t$ est obtenue en minimisant les résidus du système linéaire f(R) - $G(R)X$, où $f$ est un vecteur constitué de l'ensemble des pseudo mesures $f_q$, et $G$ une matrice construite par concaténation des vecteurs $G_q$.

Pour cela, il est possible de poser :

$$\begin{cases} \hat{P} = \left(G(R)^t . G(R)\right)^{-1} G(R)^t . f(R) \\ \hat{Z}_i M_i \\ \widehat{\Delta t} = \dfrac{1}{N} \displaystyle\sum_{i=1}^{N} (Pd_i - \|\hat{Z}_i - \hat{P}\|) \end{cases}.$$

Les valeurs $\hat{P}$ de la position du récepteur et $\widehat{\Delta t}$ de son biais d'horloge sont ensuite utilisées pour initialiser le vecteur d'état $X$ lors de la troisième étape 203 du procédé de transfert de temps selon l'invention.

Ce mode de réalisation est particulièrement intéressant, puisqu'il permet d'obtenir une première approximation très précise de la position et du biais d'horloge du récepteur, ce qui garantit le bon fonctionnement de l'algorithme optimisant un critère de maximum de vraisemblance mis en oeuvre lors de la troisième étape 203 du procédé selon l'invention. En effet, compte tenu de la forte non linéarité du problème d'estimation, l'algorithme de Gauss-Newton présente une forte probabilité de divergence en l'absence d'une initialise précise.

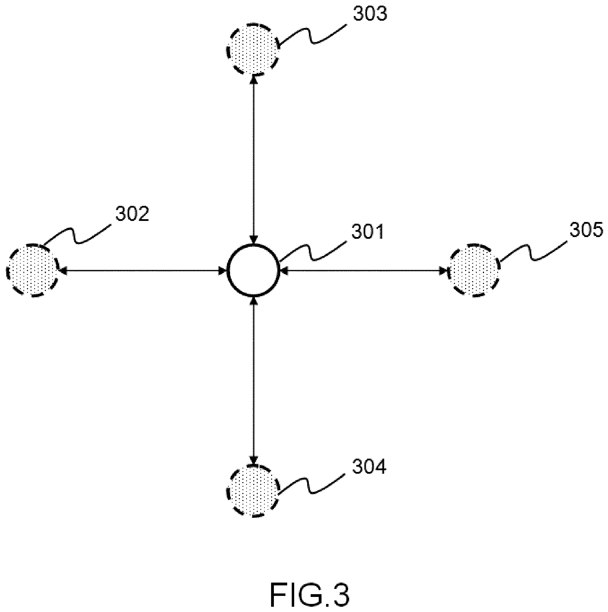

La figure 3 représente une configuration opérationnelle dans laquelle peut être mis en oeuvre un procédé de transfert de temps selon l'invention, afin de présenter les résultats qu'il permet d'atteindre. Le récepteur 301 est en lien radio avec quatre balises terrestres de transfert de temps 302 à 305, équiréparties sur un cercle centré autour de l'équipement 301. Il s'agit là d'un cas favorable.

La position des balises est connue avec un CEP de 50% (acronyme anglais pour Circle Error Probable, ou erreur circulaire probable) de 10 mètres. L'équipement 301 est capable de mesurer les temps d'arrivée des messages horaires avec une variance de 2 ns.

La mise en oeuvre du procédé de transfert de temps selon l'invention permet de synchroniser l'équipement 301 avec une précision de $\pm 40$ ns, pour un intervalle de confiance à 99%.

L'invention porte donc sur un procédé de transfert de temps d'un terminal en réception radiofréquence avec au moins trois balises terrestres de transfert de temps synchronisées diffusant chacune un message horaire comprenant un marquant horaire et une heure d'émission, mais également sur le terminal lui-même.

Un tel terminal doit disposer d'une chaîne radio lui permettant de recevoir et d'interpréter le message horaire diffusé par les balises pour déterminer un instant d'arrivée de marquants horaires, et de moyens de calculs lui permettant de mettre en oeuvre le procédé, comme par exemple un microprocesseur, un DSP (sigle anglais pour *Digital Signal Processor,* ou processeur de signal numérique), un FPGA (sigle anglais pour *Field Programmable Gate Array,* ou réseau de portes programmable), un ASIC (acronyme anglais pour *Application-Specific Integrated Circuit,* ou circuit intégré propre à une application), n'importe quelle association de ces moyens, ou n'importe quel composant matériel permettant d'exécuter les fonctions précitées.

Enfin, il porte sur un programme d'ordinateur comprenant des instructions de code de programme pour l'exécution des étapes du procédé de transfert de temps selon l'invention lorsque ledit programme est exécuté sur un ordinateur, ainsi que sur un support d'enregistrement lisible par un ordinateur sur lequel est enregistré un tel programme d'ordinateur.

**Revendications**

1. Procédé de transfert de temps vers un récepteur (101) en lien radiofréquence avec au moins trois balises terrestres de transfert de temps (102, 103, 104) synchronisées diffusant chacune un message horaire comprenant un marquant horaire et une heure d'émission, le procédé de transfert de temps comprenant :

   - une première étape (201) de calcul d'un instant d'arrivée des messages horaires transmis par lesdites balises terrestres de transfert de temps, les positions desdites balises terrestres de transfert de temps étant connues par le récepteur ou transmises au récepteur, et de détermination d'une mesure de pseudo-distance $Pd_i$ associée à chaque balise de transfert de temps,
   - une deuxième étape (202) de détermination d'une position initiale dudit récepteur et d'un décalage temporel initial entre ledit récepteur et les au moins trois balises terrestres de transfert de temps à partir des mesures de pseudo-distances calculées lors de la première étape (201),

   le procédé de transfert de temps étant **caractérisé en ce qu'**il comprend en outre :

   - une troisième étape (203) de calcul d'un décalage temporel fin dudit récepteur, par la mise en oeuvre d'un algorithme de résolution optimisant un critère de maximum de vraisemblance utilisant les valeurs calculées à la deuxième étape (202) et résolvant conjointement les positions des balises terrestres de transfert de temps, la position du récepteur et le décalage temporel du récepteur.

2. Procédé de transfert de temps selon la revendication 1, dans lequel ladite troisième étape (203) comprend :

   - la construction d'un vecteur d'état $X$ comprenant la position estimée du récepteur, le décalage temporel estimé du récepteur, et les positions estimées desdites au moins trois balises terrestres de transfert de temps,
   - la construction d'un vecteur d'observation y comprenant les positions connues ou transmises desdites au moins trois balises terrestres de transfert de temps et les pseudo-distances calculées lors de la première étape (201), la construction d'un vecteur d'observation linéarisé $Y$ comprenant un écart entre les positions connues ou transmises desdites au moins trois balises terrestres de transfert de temps et leurs positions estimées, et un écart entre les pseudo-distances calculées lors de la première étape (201) et des pseudo-distances construites à partir des valeurs du vecteur d'état $X$,
   - la construction d'une matrice Jacobienne $H$ à partir du vecteur d'état $X$ et du vecteur d'observation y tel que

   $$H = \frac{\partial y}{\partial X}$$
   , et
   - la résolution du système, en calculant $\hat{X} = H*Y$.

3. Procédé de transfert de temps selon la revendication 2, dans lequel le calcul de $\hat{X} = H*Y$ est itéré plusieurs fois, les valeurs du vecteur $Y$ et de la matrice $H$ étant recalculées à chaque itération en fonction du vecteur $\hat{X}$ déterminé à l'itération précédente.

4. Procédé de transfert de temps selon l'une des revendications précédentes, dans lequel l'algorithme utilisant un critère de maximum de vraisemblance mis en oeuvre lors de la troisième étape (203) est un algorithme de Gauss-Newton ou un algorithme de Levenberg-Marquardt.

5. Procédé de transfert de temps selon l'une des revendications précédentes, dans lequel la deuxième étape (202) est mise en oeuvre par un procédé d'estimation pseudo-linéaire de la position initiale et du décalage temporel initial dudit récepteur.

6. Procédé de transfert de temps selon la revendication 5, dans lequel le procédé d'estimation pseudo-linéaire comprend :

   - le calcul d'une position initiale $\hat{P}$ du récepteur, avec $\hat{P} = (G(R)^t.G(R))^{-1} G(R)^t.f(R)$, où $G$ est une matrice construite à partir des mesures de pseudo-distances $Pd_i$ calculées lors de la première étape 201 du procédé et des positions connues ou transmises des balises terrestres de transfert de temps, $R$ est un vecteur d'observation comprenant les mesures de pseudo-distances $Pd_i$ faites lors de la première étape (201) du procédé, et $f$ est une pseudo-mesure construite à partir des mesures de pseudo-distance $Pd_i$ faites lors de la première étape 201 du procédé et des positions connues ou transmises des balises,

- le calcul d'un décalage temporel initial $\widehat{\Delta t}$ tel que $\widehat{\Delta t} = \frac{1}{N} \sum_{i=1}^{N} (Pd_i - \|\widehat{Z_i} - \widehat{P}\|)$, avec N le nombre de balises terrestres de transfert de temps et $\widehat{Z_i}$ un vecteur comprenant les positions connues ou transmises des balises terrestres de transfert de temps.

**7.** Procédé de transfert de temps selon l'une des revendications précédentes, dans lequel la position des balises terrestres de transfert de temps est connue de manière imparfaite.

**8.** Equipement de radiocommunications (101) en lien radiofréquence avec au moins trois balises terrestres de transfert de temps (102, 103, 104) synchronisées diffusant chacune un message horaire comprenant un marquant horaire et une heure d'émission, l'équipement de radiocommunications comprenant une chaîne radio configurée pour recevoir et interpréter le message horaire transmis par les balises, l'équipement de radiocommunications étant **caractérisé en ce qu'**il comprend en outre des moyens de calculs configurés pour mettre en oeuvre un procédé de transfert de temps selon l'une des revendications 1 à 7.

**9.** Programme d'ordinateur comprenant des instructions de code de programme pour l'exécution des étapes du procédé de transfert de temps selon l'une des revendications 1 à 7 lorsque ledit programme est exécuté sur un ordinateur.

**10.** Support d'enregistrement lisible par un ordinateur sur lequel est enregistré un programme d'ordinateur selon la revendication 9.

FIG.1

| Mesures de pseudo-distances | 201 |

| Détermination d'une position initiale et d'un décalage temporel initial du récepteur | 202 |

| Calcul d'une position et d'un décalage temporel précis du récepteur, et des positions des balises | 203 |

FIG.2

303

302

301

305

304

FIG.3

Europäisches
Patentamt

European
Patent Office

Office européen
des brevets

# RAPPORT DE RECHERCHE EUROPEENNE

Numéro de la demande

EP 23 20 4537

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ALEXANDER ENS ET AL: "Unsynchronized ultrasound system for TDOA localization", 2014 INTERNATIONAL CONFERENCE ON INDOOR POSITIONING AND INDOOR NAVIGATION (IPIN), 1 octobre 2014 (2014-10-01), pages 601-610, XP055217486, DOI: 10.1109/IPIN.2014.7275533 ISBN: 978-1-46-738054-6 * abrégé * * section I * * section II * * section IV * * setcion V * ----- | 1-10 | INV. G01S5/02 G01S17/48 |
| X | WO 2010/000036 A1 (COMMW SCIENT IND RES ORG [AU]; HEDLEY MARK [AU] ET AL.) 7 janvier 2010 (2010-01-07) | 1,8-10 | |
| A | * page 1 - page 6 * * page 22 - page 26 * * page 32 - page 34 * * figures 2,9 * ----- | 2-7 | |
| | | | DOMAINES TECHNIQUES RECHERCHES (IPC) |
| A | EP 1 174 726 A2 (HITACHI LTD [JP]) 23 janvier 2002 (2002-01-23) * alinéa [0001] * * alinéa [0007] * * alinéa [0010] - alinéa [0012] * * alinéa [0019] - alinéa [0021] * * alinéa [0023] * * figure 1 * ----- -/-- | 1-8 | G01S H04J |

Le présent rapport a été établi pour toutes les revendications

| Lieu de la recherche | Date d'achèvement de la recherche | Examinateur |
|---|---|---|
| La Haye | 27 février 2024 | Marongiu, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 23 20 4537

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CHRABIEH RABIH ET AL: "Enhanced Multilateration Methods With A Global Approach", 2020 IEEE/ION POSITION, LOCATION AND NAVIGATION SYMPOSIUM (PLANS), IEEE, 20 avril 2020 (2020-04-20), pages 1070-1078, XP033778843, DOI: 10.1109/PLANS46316.2020.9110183 * abrégé * * page 1 - page 2 * * page 6 - page 7 * ----- | 1-8 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 27 février 2024 | Marongiu, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 23 20 4537

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-02-2024

| Document brevet cité au rapport de recherche | | | Date de publication | Membre(s) de la famille de brevet(s) | | | Date de publication |
|---|---|---|---|---|---|---|---|
| WO 2010000036 | A1 | | 07-01-2010 | AU | 2009266425 | A1 | 07-01-2010 |
| | | | | EP | 2307902 | A1 | 13-04-2011 |
| | | | | EP | 2674775 | A1 | 18-12-2013 |
| | | | | US | 2011188389 | A1 | 04-08-2011 |
| | | | | US | 2016370455 | A1 | 22-12-2016 |
| | | | | US | 2019317184 | A1 | 17-10-2019 |
| | | | | WO | 2010000036 | A1 | 07-01-2010 |
| EP 1174726 | A2 | | 23-01-2002 | CN | 1334688 | A | 06-02-2002 |
| | | | | DE | 60125286 | T2 | 05-07-2007 |
| | | | | EP | 1174726 | A2 | 23-01-2002 |
| | | | | JP | 3656526 | B2 | 08-06-2005 |
| | | | | JP | 2002031675 | A | 31-01-2002 |
| | | | | KR | 20020007129 | A | 26-01-2002 |
| | | | | TW | 594035 | B | 21-06-2004 |
| | | | | US | 2002009974 | A1 | 24-01-2002 |

EPO FORM P0460